# EUROPEAN PATENT APPLICATION

(11) **EP 4 668 717 A1**
(43) Date of publication of application: **24.12.2025**
(21) Application number: 23922698.8
(22) Date of filing: 15.02.2023
(51) Int. Cl.: H04L 67/55

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); DOJIRI, Syunsuke, Tokyo 100-6150 (JP); SAWADA, Masahiro, Tokyo 100-6150 (JP)
(74) Representative: Hoffmann Eitle
(86) International application number: PCT/JP2023/005343
(87) International publication number: WO 2024/171361

(57) **Abstract**

A network node includes: a reception unit configured to receive, from a DCCF (Data Collection Coordination Function), a message that includes: a first identifier configured by a terminal; information indicating an AMF (Access and Mobility Management Function); and a second identifier configured by the AMF; a transmission unit configured to transmit, to the DCCF, a response that is a response to the message and includes information indicating the node itself and a third identifier; and a control unit configured to store an association between the first identifier, the second identifier, and the third identifier.

## Description

### TECHNICAL FIELD

The present invention relates to a network node and a communication method in a communication system.

### BACKGROUND ART

In 3GPP (registered trademark) (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "5G" or "NR"). In 5G, various wireless technologies have been discussed in order to meet requirements including latency equal to or less than 1 ms in a wireless section while realizing a throughput equal to or greater than 10 Gbps.

In NR, an architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (e.g., Non-Patent Literature 1).

### CITATION LIST

### Non-Patent Literature

Non-Patent Literature 1: 3GPP TS 23.501 V18.0.0 (2022-12)
Non-Patent Literature 2: 3GPP TS 23.288 V18.0.0 (2022-12)
Non-Patent Literature 3: 3GPP TS 24.501 V18.1.0 (2022-12)
Non-Patent Literature 4: 3GPP TS 29.574 V18.0.0 (2022-12)
Non-Patent Literature 5: 3GPP TS 29.575 V18.0.0 (2022-12)
Non-Patent Literature 6: 3GPP TS 29.576 V18.0.0 (2022-12)
Non-Patent Literature 7: 3GPP TS 29.508 V18.0.0 (2022-12)

### SUMMARY OF INVENTION

### TECHNICAL PROBLEM

In the next generation system, in order to be able to flexibly deploy various services without affecting the conventional communication functions, discussions are being held on an idea of loose coupling between functions required to provide the various services and the 5GS (5G system) functions based on the PubSub platform (Publish-Subscribe platform). The PubSub platform is deployed as a DCCF (Data Collection Coordination Function) and an MFAF (Messaging Framework Adaptor Function) in 5GS (refer to Non-Patent Literature 2).

However, in the conventional technical specification, an appropriate mechanism for causing a terminal to become a publisher or a subscriber has not been specified in the PubSub platform deployed in 5GS

The present invention has been made in view of the above points, and it is an object of the present invention to enable a terminal to be a publisher or a subscriber in the PubSub platform deployed in the communication system.

### SOLUTION TO PROBLEM

According to the disclosed technique, a network node is provided. The network node includes: a reception unit configured to receive, from a DCCF (Data Collection Coordination Function), a message that includes: a first identifier configured by a terminal; information indicating an AMF (Access and Mobility Management Function); and a second identifier configured by the AMF; a transmission unit configured to transmit, to the DCCF, a response that is a response to the message and includes information indicating the node itself and a third identifier; and a control unit configured to store an association between the first identifier, the second identifier, and the third identifier.

### ADVANTAGEOUS EFFECTS OF INVENTION

According to the disclosed technique, a terminal can be a publisher or a subscriber in the PubSub platform deployed in the communication system.

### BRIEF DESCRIPTION OF DRAWINGS

[Fig. 1] is a drawing for describing an example of a communication system.
[Fig. 2] is a drawing for describing an example of a communication system under a roaming environment.
[Fig. 3] is a drawing for describing an example of a messaging framework in an embodiment of the present invention.
[Fig. 4] is a sequence diagram for describing an example (1) of subscription in an embodiment of the present invention.
[Fig. 5] is a sequence diagram for describing an example (1) of notification in an embodiment of the present invention.
[Fig. 6] is a sequence diagram for describing an example (2) of subscription in an embodiment of the present invention.
[Fig. 7] is a sequence diagram for describing an example (2) of notification in an embodiment of the present invention.
[Fig. 8] is drawing illustrating an example of a functional structure of a base station 10 and a network node 30 in an embodiment of the present invention.
[Fig. 9] is a drawing illustrating an example of a functional configuration of a terminal 20 in an embodiment of the present invention.
[Fig. 10] Fig. 10 is a drawing illustrating an example of a hardware structure of the base station 10 and the terminal 20 in an embodiment of the present invention.
[Fig. 11] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR), or wireless LAN (Local Area Network).

Further, in an embodiment of the present invention, the expression, radio parameters are "configured" may mean that a predetermined value is pre-configured, or may mean that a radio parameter indicated by a network node 30 or a terminal 20 is configured.

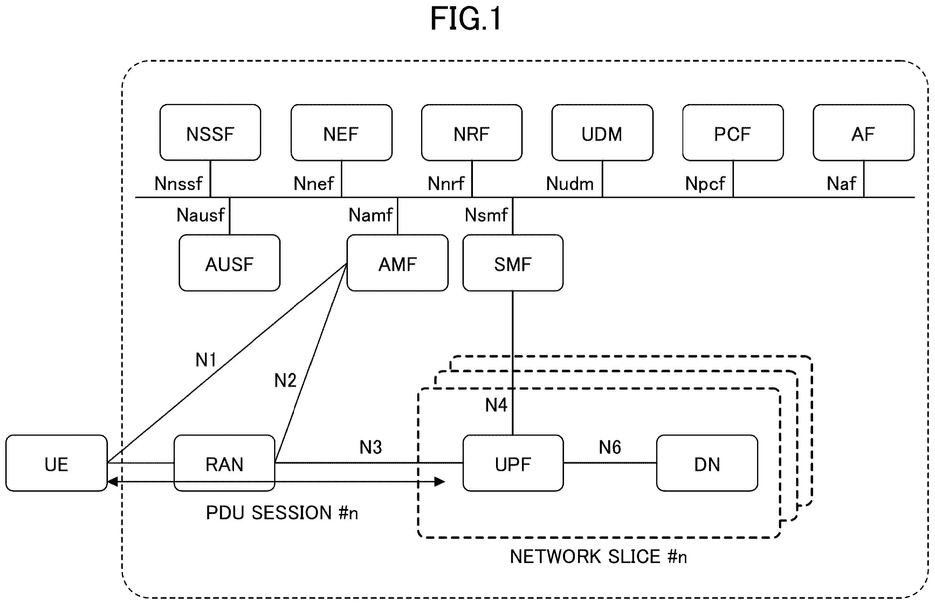

Fig. 1 is a drawing illustrating an example of a communication system. As illustrated in Fig. 1, the communication system includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN (Radio Access Network) is a network node 30 with wireless access functions, may include a base station 10, and is connected to UE, AMF (Access and Mobility Management Function) and UPF (User plane function). The AMF is a network node 30 having functions of, for example, terminating the RAN interface, terminating the NAS (Non-Access Stratum), managing registration, managing connection, managing reachability, and managing mobility. The UPF is a network node 30 interconnected with DN (Data Network), and has functions such as a PDU (Protocol Data Unit) session point to an external unit, routing and forwarding packets, and QoS (Quality of Service) handling of the user plane. UPF and DN are included in a network slice. In a wireless communication network in an embodiment of the present invention, multiple network slices are included.

AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

The SMF is a network node 30 having functions such as session management, Internet Protocol (IP) address assignment and management of UE, DHCP (Dynamic Host Configuration Protocol) function, ARP (Address Resolution Protocol) proxy, and roaming function. The NEF is a network node 30 having a function of indicating capabilities and events to other NFs (Network Functions). The NSSF is a network node 30 having functions of, for example, selecting the network slice to which the UE is to be connected, determining the allowed NSSAI (Network Slice Selection Assistance Information), determining the configured NSSAI, and determining the AMF set to which the UE is to be connected. PCF is a network node 30 having a function of performing policy control of the network. AF is a network node 30 having a function of controlling an application server. NRF is a network node 30 having a function of discovering NF instances which provide services. UDM is a network node 30 that manages subscriber data and authentication data. UDM is connected to UDR (User Data Repository) that stores the above-described data;

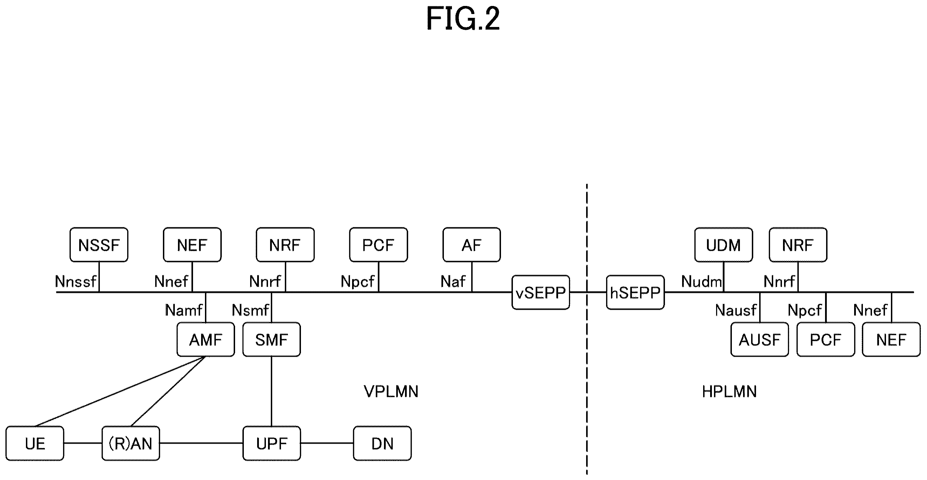

Fig. 2 is a drawing illustrating an example of a communication system under a roaming environment. As illustrated in Fig. 2, the network includes a UE that is a terminal 20, and a plurality of network nodes 30. Hereafter, one network node 30 corresponds to each function, but multiple functions may be implemented by one network node 30 or one function may be implemented by multiple network nodes 30. The "connections" described below may be either a logical connection or a physical connection.

RAN is a network node 30 having a wireless access function, and is connected to UE, AMF and UPF. AMF is a network node 30 having functions of, for example, terminating the RAN interface, terminating NAS, managing registration, managing connection, managing reachability, and managing mobility. UPF is a network node 30 having functions of, for example, PDU session point to an external unit mutually connected to DN, routing and forwarding of packets, and QoS handling of the user plane. UPF and DN are included in a network slice. In a wireless communication network in an embodiment of the present invention, multiple network slices are included.

AMF is connected to UE, RAN, SMF, NSSF, NEF, NRF, UDM, AUSF, PCF, AF, and SEPP (Security Edge Protection Proxy). AMF, SMF, NSSF, NEF, NRF, UDM, AUSF, PCF, and AF are network nodes 30 connected to each other via interfaces Namf, Nsmf, Nnssf, Nnef, Nnrf, Nudm, Nausf, Npcf, Naf based on the respective services.

SMF is a network node 30 having functions such as session management, IP address assignment and management of UE, a DHCP function, an ARP proxy, and a roaming function. NEF is a network node 30 having a function of indicating capabilities and events to other NFs. NSSF is a network node 30 having functions of, for example, selecting the network slice to which the UE is to be connected, determining NSSAI to be allowed, determining NSSAI to be configured, and determining AMF set to which the UE is to be connected. PCF is a network node 30 having a function of performing policy control of the network. AF is a network node 30 having a function of controlling an application server. NRF is a network node 30 having a function of discovering NF instances which provide services. SEPP is a non-transparent proxy and filters control plane messages between PLMNs (Public Land Mobile Networks). vSEPP shown in Fig. 2 is a SEPP in a visited network, and hSEPP is a SEPP in a home network.

As shown in Fig. 2, the UE is in a roaming environment connected to RAN and AMF in VPLMN (Visited PLMN). VPLMN and HPLMN (Home PLMN) are connected via vSEPP and hSEPP. The UE can communicate with the UDM of HPLMN via, for example, the AMF of VPLMN.

Here, in the next generation system, in order to be able to flexibly deploy various services without affecting the conventional communication functions, discussions are being held on an idea of loose coupling between functions required to provide the various services and the 5GS (5G system) functions based on the PubSub platform (Publish-Subscribe platform). An NF, an AF, or a terminal is expected to be a publisher (Publisher) or a subscriber (Subscriber) of the PubSub platform.

The PubSub platform is deployed as a DCCF (Data Collection Coordination Function) and an MFAF (Messaging Framework Adaptor Function) in 5GS (refer to Non-Patent Literature 2). Although the DCCF and the MFAF have been deployed as an enhancement of the NWDAF (Network Data Analytics Function), the DCCF and the MFAF have a general-purpose structure and can be applied as is except for involvement of a terminal when the PubSub platform is required in the next generation system. An NF or an AF becomes a publisher or a subscriber and uses the DCCF and the MFAF. In the conventional technical specification, involvement of a terminal is limited. A terminal can indirectly become a publisher by causing a terminal application to coordinate with a specific AF (refer to Non-Patent Literature 2).

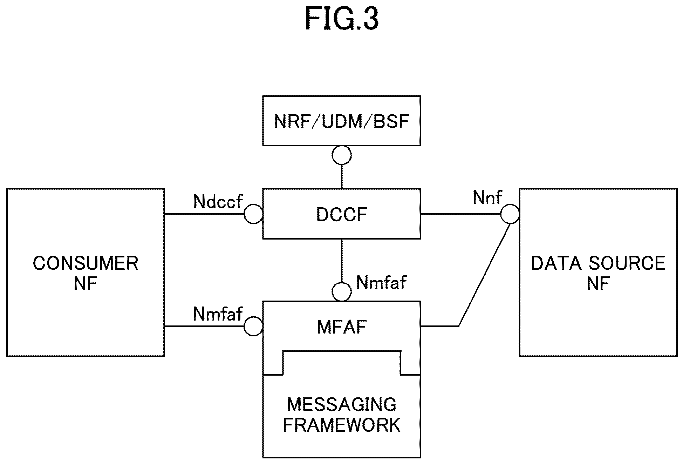

Fig. 3 is a drawing for describing an example of a messaging framework in an embodiment of the present invention. Fig. 3 illustrates an example of data delivery using the messaging framework. As illustrated in Fig. 3, a consumer NF that becomes a subscriber is connected to the DCCF via Ndccf and is connected to the MFAF via Nmfaf. The data source NF that becomes a publisher is connected to the DCCF and the MFAF via Nnf. In addition, the MFAF is connected to the DCCF via Nmfaf. In addition, the DCCF is connected to the NRF, the UDM, or the BSF (Binding Support Function).

However, there are following problems in the above-described method in which a terminal becomes a publisher.

1) The communication method between the terminal application and the specific AF is partially specified but is basically not specified in the technical specification.
2) In a case where the specific AF is out of NAT (Network Address Translation), the specific AF cannot determine a GPSI (Generic Public Subscription Identifier) or an SUPI (Subscription Permanent Identifier) of the terminal and the entire technical specification does not work.
3) In a case where the specific AF is in NAT, cache release processing of an association between: an IP address in the specific AF; and the GPSI or SUPI is complicated and is not specified in the technical specification, and thus, there is a possibility of miss recognition of a terminal during the processing.

In addition, there is no mechanism for a terminal to become a subscriber in the conventional technical specification.

As described above, an appropriate mechanism for a terminal to become a publisher or a subscriber in the PubSub platform deployed in the communication system has not been specified in the conventional technical specification.

Accordingly, the following mechanism will be deployed that enables a terminal to participate in the PubSub platform including the DCCF and the MFAF, that is, enables a terminal to subscribe an event exposed by an NF or an AF, enables an NF or an AF to subscribe an event exposed by a terminal, or enables terminals to mutually expose and subscribe an event in the PubSub platform.

Exposure of an event by a terminal will be deployed. In addition, the AMF will play a role of a proxy in the PubSub procedure between the terminal and the DCCF or the MFAF, that is, a role of linking the NAS transport between the terminal and the AMF with the SBI (Service Based Interface) between the AMF and the DCCF or the MFAF.

The conventional payload container type "event notification" will be enhanced by introducing a new payload container type "subscribe" on the NAS transport between the terminal and the AMF. With respect to the payload container types "subscribe" and "event notification", transmission and reception of: a correlation ID, that is, an awaiting ID; and a notification ID will be introduced between the terminal and the AMF.

In order for the AMF to transparently transmit or receive the payload container to or from the DCCF or MFAF, Namf_DataManagement will be introduced to the SBI between: the AMF; and the DCCF or the MFAF, and parameters will be added to Ndccf_DataManagement, Nmfaf_3daDataManagement, and Nmfaf_3caDataManegement (refer to Non-Patent Literature 2).

Transmission and reception of a correlation ID, that is, an awaiting ID, and a notification ID by the AMF, the DCCF, and the MFAF will be applied between: the AMF; and the DCCF or the MFAF. It is to be noted that the transmission and reception of a correlation ID, that is, an awaiting ID, and a notification ID between: the terminal; and the DCCF or the MFAF, may be handled as described in the conventional technical specification by treating the terminal according to the NF.

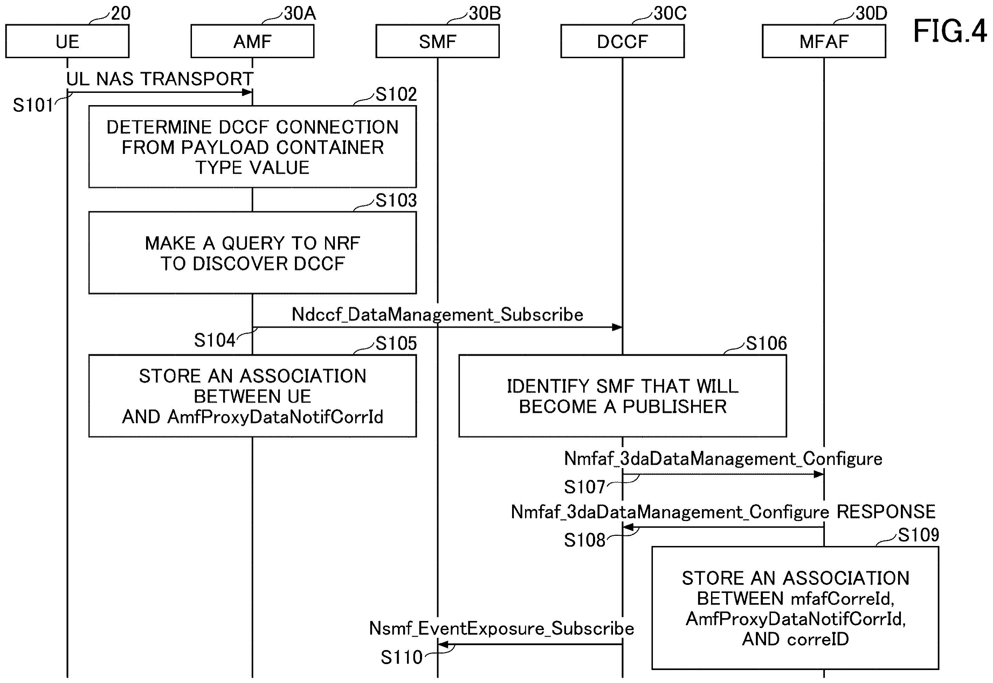

Fig. 4 is a sequence diagram for describing an example (1) of subscription in an embodiment of the present invention. In Fig. 4, a case is illustrated in which the terminal is a subscriber and the SMF is a publisher. It is to be noted that although the publisher is an SMF in Fig. 4, the same procedure will be applied in a case where the publisher is a different NF.

In step S101, the UE 20 that is a subscriber transmits a UL NAS transport to the AMF 30A (refer to Non-Patent Literature 3). With respect to the UL NAS transport, the payload container type is "subscribe" and a payload container information element, NdccfDataSubscription, is included (refer to Non-Patent Literature 4). The information element includes dataNotifUri and dataNotifCorrId in which values corresponding to the UE 20 itself are configured by the UE 20. It is to be noted that the dataNotifCorrId may be a value that can be identified in the terminal. In addition, the information element includes dataSub. The UE 20 configures smfDataSub in the dataSub (refer to Non-Patent Literature 5).

In subsequent step S102, the AMF 30A determines the DCCF connection based on the payload container type value. In subsequent step S103, the AMF 30A makes a query to the NRF to discover the DCCF.

In subsequent step S104, the AMF 30A transmits an Ndccf_DataManagement_Subscribe message to the DCCF 30C (refer to Non-Patent Literature 2). The message (refer to Non-Patent Literature 5) includes the above-described NdccfDataSubscription (refer to Non-Patent Literature 4). In addition, the message includes AmfDccfProxyConfig. The AmfDccfProxyConfig includes AmfProxyDataNotifUrl and AmfProxyDataNotifCorrId in which values corresponding to the AMF 30A itself are configured by the AMF 30A. In subsequent step S105, the AMF 30A stores an association between the UE 20 and the AmfProxyDataNotifCorrId.

In step S106, the DCCF 30C identifies an SMF that will become a publisher (refer to Non-Patent Literature 2). In subsequent step S107, the DCCF 30C transmits an Nmfaf_3daDataManagement_Configure message to the MFAF 30D (refer to Non-Patent Literature 2). The message (refer to Non-Patent Literature 6) includes a MfafConfiguration information element. The information element includes notificationURI and correId. The DCCF 30C configures the value of dataNotifUri and the value of the dataNotifCorrId that are configured by the UE 20 and are obtained from the above-described NdccfDataSubscription in the above-described notificationURI and the above-described correId, respectively. In addition, the message includes a DccfMfafProxyConfig information element. The information element includes AmfProxyDataNotifUri and AmfProxyDataNotifCorrId. The DCCF 30C configures the values configured by the AMF 30A and are obtained from the above-described AmfDccfProxyConfig in the above-described DccfMfafProxyConfig.

In subsequent step S108, the MFAF 30D transmits an Nmfaf_3daDataManagement_Configure response message to the DCCF 30C. The response message includes an MfafConfiguration information element (refer to Non-Patent Literature 6). The information element includes an mfafNotifInfo information element. The mfafNotifInfo includes mfafNotifUri and mfafCorreId in which values corresponding to the MFAF 30D itself are configured by the MFAF 30D.

In subsequent step S109, the MFAF 30D stores an association between the mfafCorreId configured by the MFAF 30D itself, the AmfProxyDataNotifCorrId configured by the AMF 30A, and the correId configured by the UE 20. The mfafCorreId, the AmfProxyDataNotifCorrId, and the correId may be correlation IDs.

In step S110, the DCCF 30C transmits an Nsmf_EventExposure_Subscribe message to the SMF 30B (refer to Non-Patent Literature 2). The message includes smfDataSub (refer to Non-Patent Literature 5), that is, an NsmfEventExposure information element (refer to Non-Patent Literature 7). The information element includes notifUri and notifId. The DCCF 30C configures the value of mfafNotifUri and the value of mfafCorreId in the above-described notifUri and the above-described notifId, respectively.

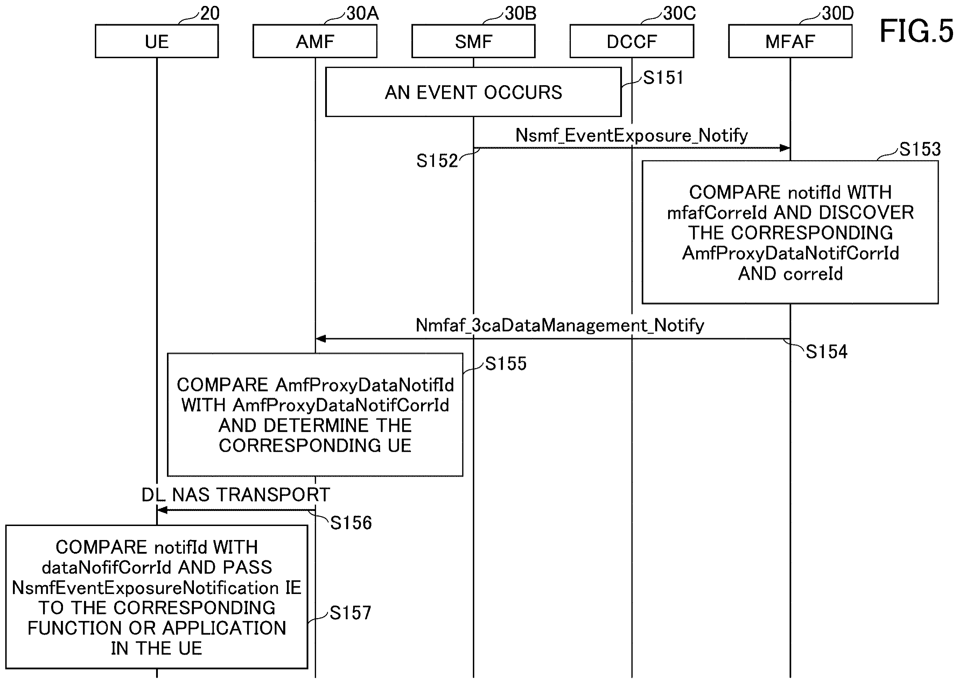

Fig. 5 is a sequence diagram for describing an example (1) of notification in an embodiment of the present invention. In Fig. 5, a case is illustrated in which the terminal is a subscriber and the SMF is a publisher. It is to be noted that although the publisher is an SMF in Fig. 5, the same procedure will be applied in a case where the publisher is a different NF.

In step S151, an event occurs at the SMF 30B. In subsequent step S152, an Nsmf_EventExposure_Notify message is transmitted to the notifUri configured by the MFAF 30D, that is, the MFAF 30D (refer to Non-Patent Literature 2). The message includes an NsmfEventExposureNotification information element (refer to Non-Patent Literature 7). The information element includes notifId. The SMF 30B configures a value of notifId obtained from the Nsmf_EventExposure_Subscribe in step S110 in the above-described notifId.

In subsequent step S153, the MFAF 30D compares the value of notifId with the value of mfafCorreId that has been configured before by the MFAF 30D itself, and discovers the corresponding AmfProxyDataNotifCorrId configured by the AMF 30A and correId configured by the terminal.

In subsequent step S154, the MFAF 30D transmits an Nmfaf_3caDataManagement_Notify message to the AmfProxyDataNotifUri corresponding to the AmfProxyDataNotifCorrId, that is, to the AMF 30A (refer to Non-Patent Literature 2). The message (refer to Non-Patent Literature 6) includes an NmfafDataRetrievalNotification information element. The information message includes NsmfEventExposureNotification (refer to Non-Patent Literature 7). The NsmfEventExposureNotification includes notifiId. The MFAF 30D configures the value of correId that has been configured by the UE 20 and has been discovered in step S153 in the above-described notifId. In addition, the message includes AmfProxyDataNotifId. The MFAF 30D configures the value of AmfProxyDataNotifCorrId that has been configured by the AMF 30A and has been discovered in step S153 in the above-described AmfProxyDataNotifId.

In subsequent step S155, the AMF 30A compares the received value of AmfProxyDataNotifId with the value of AmfProxyDataNotifCorrId that has been configured before by the AMF 30A itself, and determines the corresponding UE 20.

In subsequent step S156, the AMF 30A transmits a DL NAS transport (refer to Non-Patent Literature 3) to the UE 20. With respect to the message, the payload container type is "event notification" and an NmfafDataRetrievalNotification information element is configured in an event notification indication of the payload container (refer to Non-Patent Literature 3). The information message includes NsmfEventExposureNotification (refer to Non-Patent Literature 7). The NsmfEventExposureNotification includes the notifiId configured by the UE 20.

In subsequent step S157, the UE 20 compares the value of notifiId with the value of dataNotifCorrId that has been configured before by the UE 20 itself, and passes the NsmfEventExposureNotification information element to the corresponding function or application in the terminal, as appropriate.

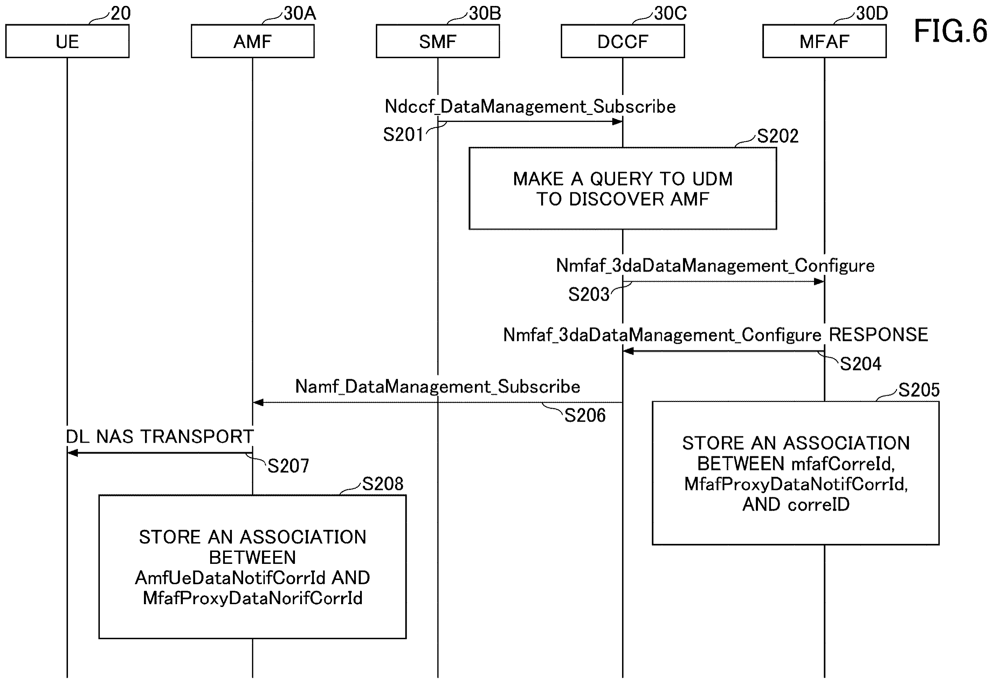

Fig. 6 is a sequence diagram for describing an example (2) of subscription in an embodiment of the present invention. In Fig. 6, a case is illustrated in which the terminal is a publisher and the SMF is a subscriber. It is to be noted that although the subscriber is an SMF in Fig. 6, the same procedure will be applied in a case where the subscriber is a different NF.

In step S201, the SMF 30B that is a subscriber transmits an Ndccf_DataManagement_Subscribe message to the DCCF 30C (refer to Non-Patent Literature 2). The message includes an NdccfDataSubscription information element (refer to Non-Patent Literature 4). The information element includes dataNotifUri and dataNotifCorrId in which values corresponding to the SMF 30B itself are configured by the SMF 30B. In addition, the information element includes dataSub. The SMF configures ueDataSub in the dataSub. It is to be noted that there may be a case in which the information element includes SUPI. The UE 20 that becomes a publisher may be defined by using some kind of features or grouping, but SUPI is defined to be included for the sake of a simple example.

In subsequent step S202, the DCCF 30C makes a query to the UDM to identify an AMF 30A that supports the SUPI (refer to Non-Patent Literature 2). In subsequent step S203, the DCCF 30C transmits an Nmfaf_3daDataManagement_Configure message to the MFAF 30D (refer to Non-Patent Literature 2). The message includes an MfafConfiguration information element (refer to Non-Patent Literature 6). The information element includes notificationURI and correId. The DCCF 30C configures the value of dataNotifUri and the value of the dataNotifCorrId that are configured by the SMF 30B and are obtained from the above-described NdccfDataSubscription in the above-described notificationURI and the above-described correId, respectively.

In subsequent step S204, the MFAF 30D transmits an Nmfaf_3daDataManagement_Configure response message to the DCCF 30C (refer to Non-Patent Literature 2). The response message includes an MfafConfiguration information element (refer to Non-Patent Literature 6) and the information element includes an mfafNotiInfo information element (refer to Non-Patent Literature 6). The mfafNotiInfo includes mfafNotifUri and mfafCorreId. The MFAF 30D configures values corresponding to the MFAF 30D itself in the above-described mfafNotifUri and the above-described mfafCorreId for the UE 20. In addition, the message includes an MfafDccfProxyConfig information element. The information element includes MfafProxyDataNotifUri and MfafProxyDataNotifCorrId. The MFAF 30D configures the values corresponding to the MFAF 30D in the above-described MfafProxyDataNotifUri and the above-described MfafProxyDataNotifCorrId, respectively, for the AMF 30A.

In subsequent step S205, the MFAF 30D stores an association between the mfafCorreId configured by the MFAF 30D itself for the UE 20, the MfafProxyDataNotifCorrId configured by the MFAF 30D itself for the AMF 30A, and the correId configured by the SMF 30B. The mfafCorreId, the MfafProxyDataNotifCorrId, and the correId may be correlation IDs.

In step S206, the DCCF 30C transmits an Namf_DataManagement_Subscribe message to the AMF 30A (refer to Non-Patent Literature 2). The message includes a UeDataSubscription information element. The information element includes dataNotifUri and dataNotifCorrId. The DCCF 30C configures the value of mfafNotifUri and the value of mfafCorreId in the above-described dataNotifUri and the above-described dataNotifCorrId, respectively, for the UE 20. In addition, the information element includes ueDataSub. The message includes a DccfAmfProxyConfig information element. The DCCF 30C configures the value of MfafDccfProxyConfig in the above-described DccfAmfProxyConfig for the AMF 30A.

In subsequent step S207, the AMF 30A transmits a DL NAS transport to the UE 20 (refer to Non-Patent Literature 3). The DL NAS transport includes AmfUeDataNotifCorrId, the payload container type "subscribe", and a UeDataSubscription information element that is a payload container (refer to Non-Patent Literature 3). The AMF 30A configures a value corresponding to the AMF 30A itself in the AmfUeDataNotifCorrId.

In subsequent step S208, the AMF 30A stores an association between the AmfUeDataNotifCorrId configured by the AMF 30A itself for the UE 20 and the MfafProxyDataNotifCorrId configured by the MFAF 30D for the AMF 30A.

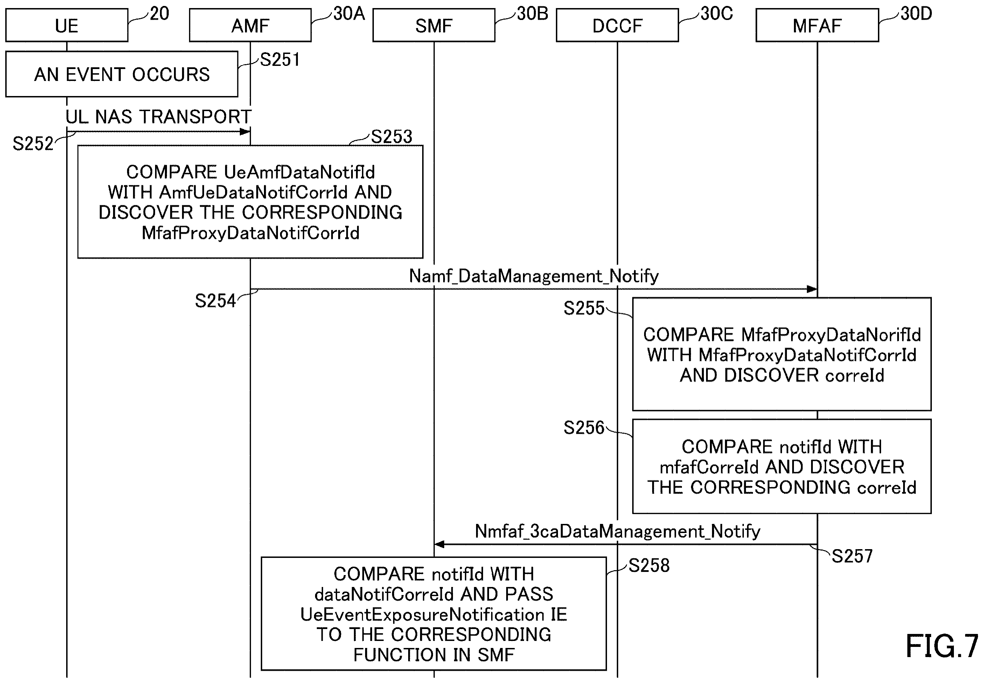

Fig. 7 is a sequence diagram for describing an example (2) of notification in an embodiment of the present invention. In Fig. 7, a case is illustrated in which the terminal is a publisher and the SMF is a subscriber. It is to be noted that although the subscriber is an SMF in Fig. 6, the same procedure will be applied in a case where the subscriber is a different NF.

In step S251, an event occurs at the UE 20. In subsequent step S252, the UE 20 transmits a UL NAS transport to the AMF 30A (refer to Non-Patent Literature 3). The UL NAS transport includes UeAmfDataNotifiId, the payload container type "event notification", and a UeEventExposureNotification information element configured in an event notification indication of the payload container. The UE 20 configures the value of AmfUeDataNotifCorrId that has been obtained in step S207 in the above-described UeAmfDataNotifiId. The UeEventExposureNotification includes notifId. The UE 20 configures the value of dataNotifCorrId that is configured by the MFAF 30D for the UE 20 and has been obtained from the UeDataSubscription in step S207 in the above-described notifId.

In subsequent step S253, the AMF 30A compares the value of UeAmfDataNotifiId with the value of AmfUeDataNotifCorrId that configured before by the AMF 30A itself, and discovers the corresponding MfafProxyDataNotifCorrId configured by the MFAF 30D for the AMF 30A.

In subsequent step S254, the AMF 30A transmits an Namf_DataManagement_Notify message to the MfafProxyDataNotifUri corresponding to the MfafProxyDataNotifCorrId, that is, to the MFAF 30D. The message includes a UeEventExposureNotification information element. The information element includes notifId configured by the UE 20 for the MFAF 30D. In addition, the message includes MfafProxyDataNotifId. The AMF 30A configures the value of MfafProxyDataNotifCorrId configured by the MFAF 30D for the AMF 30A in the above-described MfafProxyDataNotifId.

In subsequent step S255, the MFAF 30D compares the value of MfafProxyDataNotifId with the value of MfafProxyDataNotifCorrId configured before by the MFAF 30D itself, and discovers the corresponding correId configured by the SMF 30B. In subsequent step S256, the MFAF 30D compares the value of notifId with the value of mfafCorreId configured before by the MFAF 30D itself, and discovers the corresponding correId configured by the SMF 30B. It is to be noted that two-step checking related to the correId is performed in step S255 and step S256.

In subsequent step S257, the MFAF 30D transmits an Nmfaf_3caDataManagement_Notify message to the notificationURI corresponding to the correId, that is, the SMF 30B (refer to Non-Patent Literature 2). The message includes an NmfafDataRetrievalNotification information element (refer to Non-Patent Literature 6). The information message includes UeEventExposureNotification.

In subsequent step S258, the SMF 30B compares the value of notifId with the value of dataNotifCorrId that has been configured before by the SMF 30B itself, and passes the UeEventExposureNotification information element to the corresponding function in the SMF 30B, as appropriate.

According to an embodiment of the present invention, the terminal can be a subscriber or a publisher in the 5GS in which the messaging framework based on the PubSub platform is deployed.

In other words, the terminal can be a publisher or a subscriber in the PubSub platform that is deployed in the communication system.

### (Device configuration)

Next, a functional configuration example of the base station 10, network node 30 and the terminal 20 that perform processes and operations described above will be described. The base station 10, the network node 30 and the terminal 20 include functions for implementing the embodiments described above. It should be noted, however, that each of the base station 10, the network node 30 and the terminal 20 may include only some of the functions in the embodiments.

### <Base station 10 and network node 30>

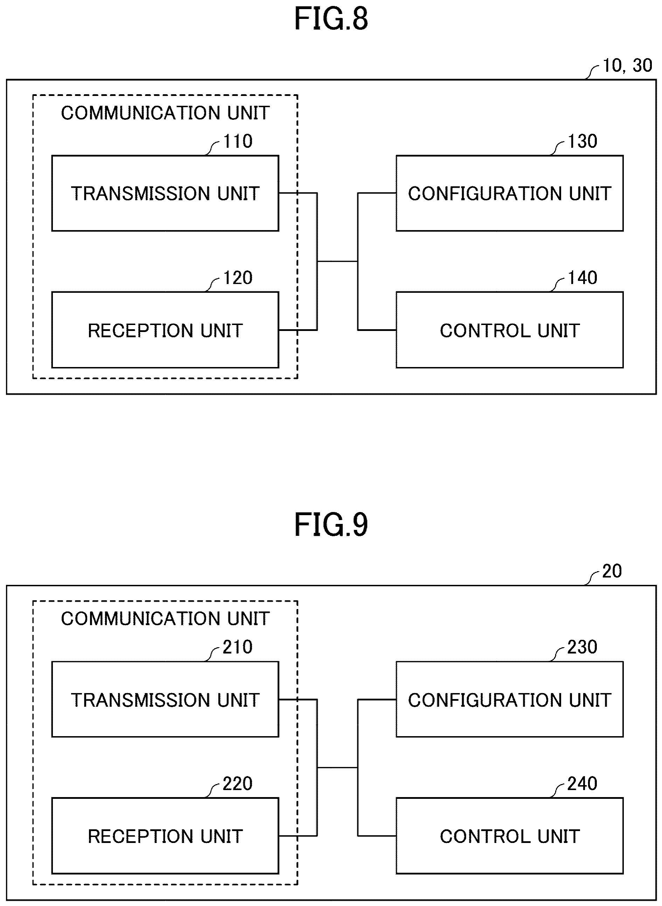

Fig. 8 is a drawing illustrating an example of a functional configuration of the base station 10 and the network node 30. As shown in Fig. 8, the base station 10 includes a transmission unit 110, a reception unit 120, a configuration unit 130, and a control unit 140. The functional configuration illustrated in Fig. 8 is merely an example. Functional divisions and names of functional units may be anything as long as operations according to an embodiment of the present invention can be performed. Note that the network node 30 may have the same functional configuration as the base station 10. In addition, the network nodes 30 having multiple different functions in the system architecture may be composed of multiple network nodes 30 separated for each function.

The transmission unit 110 includes a function for generating a signal to be transmitted to the terminal 20 or to another network node 30 and transmitting the signal in a wired manner or wireless manner. The reception unit 120 includes a function for receiving various signals transmitted from the terminal 20 or another network node 30, and for acquiring, for example, information of an upper layer from the received signals. A communication unit including the transmission unit 110 and the reception unit 120 may be configured.

The configuration unit 130 stores preset configuration information and various configuration information items to be transmitted to the terminal 20 in a storage apparatus and reads the preset configuration information from the storage apparatus as necessary. Contents of the configuration information are, for example, information related to the messaging in the PubSub platform.

The control unit 140 performs a process related to communications in the network as described in the embodiments. In addition, the control unit 140 performs a process related to the messaging in the PubSub platform. Further, the control unit 140 performs a process related to communications with the terminal 20. The functional units related to signal transmission in the control unit 140 may be included in the transmission unit 110, and the functional units related to signal reception in the control unit 140 may be included in the reception unit 120.

### <Terminal 20>

Fig. 9 is a diagram illustrating an example of a functional configuration of the terminal 20. As shown in Fig. 9, the terminal 20 includes a transmission unit 210, a reception unit 220, a configuration unit 230, and a control unit 240. The functional configuration illustrated in Fig. 9 is merely an example. Functional divisions and names of functional units may be anything as long as operations according to an embodiment of the present invention can be performed. In addition, the communication apparatus that is a resource holder 20 may have a functional configuration similar to the terminal 20.

The transmission unit 210 generates a transmission signal from transmission data and transmits the transmission signal wirelessly. The reception unit 220 receives various signals wirelessly and obtains higher layer signals from the received physical layer signals. Further, the reception unit 220 has a function of receiving NR-PSS, NR-SSS, NR-PBCH, DL/UL control signals, or reference signals transmitted from the network node 30. A communication unit including the transmission unit 210 and the reception unit 220 may be configured.

The configuration unit 230 stores various types of configuration information received from the network node 30 by the reception unit 220 in the storage device and reads the configuration information from the storage device as necessary. In addition, the configuration unit 230 also stores pre-configured configuration information. Contents of the configuration information are, for example, information related to the messaging in the PubSub platform.

The control unit 240 performs a process related to communications in the network as described in the embodiments. In addition, the control unit 240 performs a process related to the messaging in the PubSub platform. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 8 and Fig. 9) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

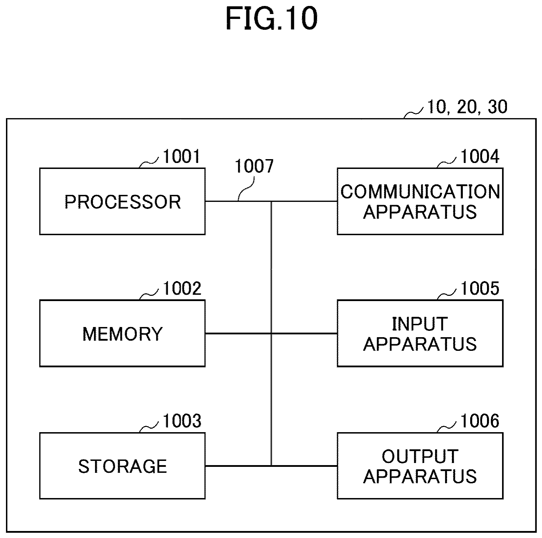

For example, the network node 30, terminal 20, etc., according to an embodiment of the present disclosure may function as a computer for processing the radio communication method of the present disclosure. Fig. 10 is a diagram to show an example of a hardware structure of the base station 10 and the terminal 20 according to one embodiment. The network node 30 may have the same hardware configuration as the base station 10. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 8 may be implemented by control programs that are stored in the memory 1002 and that operate on the processor 1001. In addition, for example, the control unit 240 of the terminal 20 illustrated in Fig. 9 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

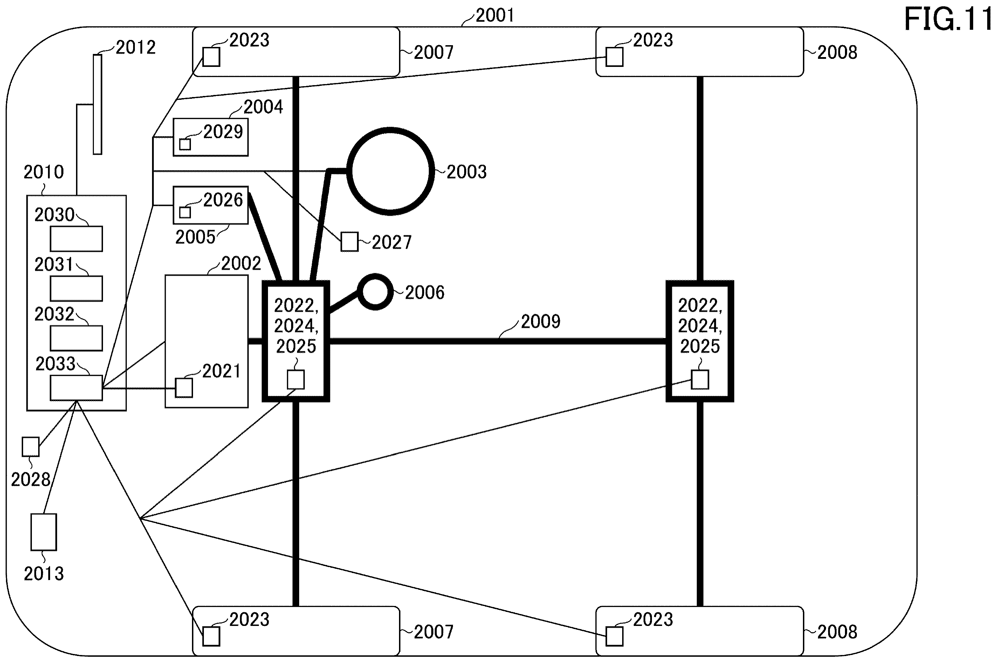

Fig. 11 shows an example of a configuration of a vehicle 2001. As shown in Fig. 11, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit, to an external device by using wireless communications, at least one of: a signal from the above-described various sensors 2021 to 2028 that is input to the electronic control unit 2010; information that is obtained based on the signal; or information based on an input obtained from outside (user) via the information service unit 2012. The electronic control unit 2010, the various sensors 2021 to 2028, the information service unit 2012, or the like, may be referred to as an input unit for receiving an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display and a speaker, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

According to the disclosed technique, according to an embodiment of the present invention, a network node is provided. The network node includes: a reception unit configured to receive, from a DCCF (Data Collection Coordination Function), a message that includes a first identifier configured by a terminal and that includes information indicating an AMF (Access and Mobility Management Function) and a second identifier configured by the AMF; a transmission unit configured to transmit, to the DCCF, a response that is a response to the message and includes information indicating the node itself and a third identifier; and a control unit configured to store an association between the first identifier, the second identifier, and the third identifier.

According to the above-described configuration, the terminal can be a subscriber or a publisher in the 5GS in which the messaging framework based on the PubSub platform is deployed. In other words, the terminal can be a publisher or a subscriber in the PubSub platform that is deployed in the communication system.

The reception unit may receive, from a certain node, a message indicating an event notification including the third identifier, the control unit may identify the AMF, and the transmission unit may transmit, to the AMF, a message indicating an event notification including the first identifier and the second identifier. According to the above-described configuration, the terminal can be a subscriber or a publisher in the 5GS in which the messaging framework based on the PubSub platform is deployed.

According to the disclosed technique, according to an embodiment of the present invention, a network node is provided. The network node includes: a reception unit configured to receive, from a DCCF (Data Collection Coordination Function), a message including a first identifier configured by a certain node; a transmission unit configured to transmit, to the DCCF, a response to the message, the response including information indicating the node itself, a second identifier for an AMF (Access and Mobility Management Function), and a third identifier for a terminal; and a control unit configured to store an association between the first identifier, the second identifier, and the third identifier.

According to the above-described configuration, the terminal can be a subscriber or a publisher in the 5GS in which the messaging framework based on the PubSub platform is deployed. In other words, the terminal can be a publisher or a subscriber in the PubSub platform that is deployed in the communication system.

The reception unit may receive, from the AMF, a message indicating an event notification including the second identifier and the third identifier, the control unit may identify the certain node based on the second identifier and the third identifier, and the transmission unit may transmit, to the certain node, a message indicating an event notification including the first identifier. According to the above-described configuration, the terminal can be a subscriber or a publisher in the 5GS in which the messaging framework based on the PubSub platform is deployed.

In addition, according to an embodiment of the present invention, a communication method performed by a network node is provided. The communication method includes: receiving, from a DCCF (Data Collection Coordination Function), a message that includes a first identifier configured by a terminal and that includes information indicating an AMF (Access and Mobility Management Function) and a second identifier configured by the AMF; transmitting, to the DCCF, a response that is a response to the message, the response including information indicating the node itself and a third identifier, and storing an association between the first identifier, the second identifier, and the third identifier.

According to the above-described configuration, the terminal can be a subscriber or a publisher in the 5GS in which the messaging framework based on the PubSub platform is deployed. In other words, the terminal can be a publisher or a subscriber in the PubSub platform that is deployed in the communication system.

In addition, according to an embodiment of the present invention, a communication method performed by a network node is provided. The communication method includes: receiving, from a DCCF (Data Collection Coordination Function), a message including a first identifier configured by a certain node; transmitting, to the DCCF, a response that is a response to the message and that includes information indicating the node itself, a second identifier for an AMF (Access and Mobility Management Function), and a third identifier for a terminal; and storing an association between the first identifier, the second identifier, and the third identifier.

According to the above-described configuration, the terminal can be a subscriber or a publisher in the 5GS in which the messaging framework based on the PubSub platform is deployed. In other words, the terminal can be a publisher or a subscriber in the PubSub platform that is deployed in the communication system.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling), broadcast information (MIB (Master Information Block), SIB (System Information Block)), other signals, or a combination thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "Base Station (BS)", "Radio Base Station", "Base Station Apparatus", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure that replaces a communication between a base station and a user terminal with a communication between a plurality of terminals 20 (for example, which may be referred to as "Device-to-Device (D2D)," "Vehicle-to-Everything (V2X)," and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

An aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
30 Network node
1001 Processor
1002 Memory
1003 Storage
1004 Communication apparatus
1005 Input apparatus
1006 Output apparatus

## Claims

1. A network node comprising:
a reception unit configured to receive, from a DCCF (Data Collection Coordination Function), a message that includes: a first identifier configured by a terminal; information indicating an AMF (Access and Mobility Management Function); and a second identifier configured by the AMF;
a transmission unit configured to transmit, to the DCCF, a response that is a response to the message and includes information indicating the node itself and a third identifier; and
a control unit configured to store an association between the first identifier, the second identifier, and the third identifier.

2. The network node as claimed in claim 1, wherein
the reception unit receives, from a certain node, a message indicating an event notification including the third identifier,
the control unit identifies the AMF, and
the transmission unit transmits, to the AMF, a message indicating an event notification including the first identifier and the second identifier.

3. A network node comprising:
a reception unit configured to receive, from a DCCF (Data Collection Coordination Function), a message including a first identifier configured by a certain node;
a transmission unit configured to transmit, to the DCCF, a response to the message, the response including information indicating the node itself, a second identifier for an AMF (Access and Mobility Management Function), and a third identifier for a terminal; and
a control unit configured to store an association between the first identifier, the second identifier, and the third identifier.

4. The network node as claimed in claim 3, wherein
the reception unit receives, from the AMF, a message indicating an event notification including the second identifier and the third identifier,
the control unit identifies the certain node based on the second identifier and the third identifier, and
the transmission unit transmits, to the certain node, a message indicating an event notification including the first identifier.

5. A communication method performed by a network node, the communication method comprising:
receiving, from a DCCF (Data Collection Coordination Function), a message that includes a first identifier configured by a terminal and that includes information indicating an AMF (Access and Mobility Management Function) and a second identifier configured by the AMF;
transmitting, to the DCCF, a response that is a response to the message and includes information indicating the node itself and a third identifier, and
storing an association between the first identifier, the second identifier, and the third identifier.

6. A communication method performed by a network node, the communication method comprising:
receiving, from a DCCF (Data Collection Coordination Function), a message including a first identifier configured by a certain node;
transmitting, to the DCCF, a response that is a response to the message, the response including information indicating the node itself, a second identifier for an AMF (Access and Mobility Management Function), and a third identifier for a terminal; and
storing an association between the first identifier, the second identifier, and the third identifier.
